# EUROPÄISCHE PATENTSCHRIFT

(11) **EP 2 584 392 B1**
(45) Veröffentlichungstag und Bekanntmachung des Hinweises auf die Patenterteilung: **02.12.2020**
(21) Anmeldenummer: 12187886.2
(22) Anmeldetag: 10.10.2012
(51) Int. Cl.: G02B 21/02, G02B 21/33, G02B 27/00

(54) **Planapochromatisch korrigiertes Mikroskopobjektiv**
Plane apochromatically corrected microscope lens
Objectif de microscope à correction planapochromatique

(30) Priorität: 20.10.2011 DE 102011116757
(43) Veröffentlichungstag der Anmeldung: 24.04.2013
(73) Patentinhaber: Carl Zeiss Microscopy GmbH, 07745 Jena (DE)
(72) Erfinder: Matthä, Manfred, 07747 Jena (DE); Herbst, Georg, 37085 Göttingen (DE)
(74) Vertreter: Müller, Silke

(56) Entgegenhaltungen:
- DE-A1-102006 052 142
- US-A1- 2008 106 795

## Beschreibung

Die Erfindung betrifft ein planapochromatisch korrigiertes Immersions- Mikroskopobjektiv für hochauflösende Mikroskopieanwendungen mit wechselnden dispersiven Immersionsverhältnissen, welches aus mehreren Linsen und/oder Linsengruppen umfassenden Teilsystemen zusammengesetzt ist und eine Korrekturfunktion zur Beseitigung sphärischer Aberrationen besitzt.

In der hochwertigen Mikroskopie ist es von großer Bedeutung die Objektinformationen frei von sogenannten Bildfehlern (Aberrationen) in die Bildebene zu übertragen. Treten Abweichungen von den gerechneten Idealverhältnissen auf, werden Aberrationen generiert. Eine Form dieser Abweichungen sind beispielsweise notwendige Systemtoleranzen, die für eine kostengünstige Fertigung eines Mikroskops unumgänglich sind. Die durch die Toleranzen erzeugten Aberrationen werden in der Regel mit geeigneten Justieroptionen wieder beseitigt. Allerdings gibt es im täglichen Gebrauch des Mikroskops auch Einflüsse auf die Idealverhältnisse, welche nicht durch Justierungen verändert werden können und zu Aberrationen führen, die die optische Abbildung sichtbar mindern. Beispiele dafür sind thermische Einwirkungen oder Toleranzablagen der verwendeten Deckgläser. So kann beispielsweise eine Abweichung der Deckglasdicke von nur 0,01 mm bei hochaperturigen Mikroskopobjektiven zu einem erheblichen sphärischen Fehler führen.
Bei Anwendungen im "Live Cell" Bereich ist es vorteilhaft bei Temperaturen von bis zu 37 Grad Celsius zu arbeiten. Auch hierbei entstehen sphärische Aberrationen. Um auch für diese Anwendungen gute Arbeitsbedingungen zu ermöglichen, wurden Mikroskopobjektive mit einer Korrekturfunktion zur Beseitigung des sphärischen Fehlers (Aberration) entwickelt. Diese Korrekturfunktion wird durch verstellbare Luftabstände, beziehungsweise Luftabstandskombinationen zwischen den optischen Elementen des Mikroskopobjektivs realisiert. Eine derartige Lösung wird beispielsweise in US 5,940,220 vorgestellt.
Dabei dürfen die Abstandsänderungen nur den Bildfehler beeinflussen, der aus der Art der Anwendung entsteht und beseitigt werden soll. Dies setzt voraus, dass innerhalb der Entwicklungsphase des optischen Systems solche Abstandswirkungen gezielt erzeugt werden.

In der modernen Mikroskopie wird zunehmend in die Probe hinein fokussiert. Dabei ändert sich der Immersionszustand für den ein spezielles Objektiv entwickelt wurde. Bedingt durch spektrale Brechzahländerungen zwischen der Immersion und der Probe kann es schon im Achsbereich des Objektivs neben den sphärischen Aberrationen auch zu erheblichen Farblängsfehlern kommen, die die achromatischen oder apochromatischen Eigenschaften eines Mikroskopobjektivs zerstören, so dass die Farbabbildung deutlich verschlechtert wird.
Der gleiche Zustand tritt ein, wenn Objektive mit unterschiedlichen Immersionen eingesetzt werden. Sobald die dispersiven Eigenschaften der Immersionen voneinander abweichen, bedeutet dies einen zusätzlichen Farblängsfehler und somit ebenfalls den Verlust der achromatischen, beziehungsweise apochromatischen Eigenschaften des Mikroskopobjektivs.

Mit den bekannten Korrektions-Mikroskopobjektiven, die für konstante Immersionsverhältnisse konzipiert sind, lassen sich die chromatischen Fehler in der Abbildung nicht beseitigen.

Ausgehend von den Nachteilen der Lösung des Standes der Technik liegt der Erfindung die Aufgabe zugrunde, ein planapochromatisches korrigiertes Immersions-Mikroskopobjektiv für hochauflösende Mikroskopieanwendungen dahingehend weiter zu entwickeln, dass bei dispersiven Änderungen im Immersions- und im Probenbereich sowohl die sphärischen Aberrationsfehler als auch die Farblängsfehler beseitigt werden (Doppelkorrektions- Mikroskopobjektiv).
Erfindungsgemäß wird diese Aufgabe mit einem planapochromatischen Mikroskopobjektiv der eingangs beschriebenen Art durch die Merkmale des Patentanspruchs 1 gelöst.
Vorteilhafte Ausgestaltungen sind in den Unteransprüchen 2 bis 8 angegeben.
Erfindungsgemäß weist das Mikroskopobjektiv eine weitere Korrekturfunktion zur Beseitigung von Farblängsfehlern infolge dispersiver Änderungen in der Immersion durch Veränderung von Luftabständen zwischen den Linsen oder Abstandskombinationen auf, wobei die Einflussnahme auf den Farblängsfehler einer Drehung der Kurve s(λ) welche die Abhängigkeit des Farbortes s von der Wellenlänge λ beschreibt, entspricht, wobei die Drehrichtung durch die Über- oder Unterkorrektion des Farblängsfehlers bestimmt ist.
Ausgehend von der Objektebene besteht das Mikroskopobjektiv aus drei Teilsysteme, wobei
- das erste Teilsystem aus zwei Sammellinsen besteht, welche in Richtung der Objektebene durchgebogenen sind,
- das zweite Teilsystem aus zwei Zweifachkittgliedern und einem Dreifachkittglied besteht, wobei die in Richtung der Objektebene orientierten Linsen Sammellinsen sind,
- das dritte Teilsystem aus einem Zweifachkittglied und einem Dreifachkittglied in einer gaussförmigen Anordnung besteht, wobei die konkave Fläche des Zweifachkittgliedes der Bildseite zugewandt ist und die konkave Fläche des Dreifachkittgliedes in Richtung der Objektebene orientiert ist.

Die Korrekturfunktion zur Beseitigung sphärischer Aberrationen erfolgt durch Veränderung des Nijboer-Zernike Koeffizienten 3. Ordnung, wobei eine durch Nijboer-Zernike Polynome beschriebenen Wellenfläche zur optischen Abbildung eines Punktes variiert wird.

Bedingt durch die beiden Korrekturfunktionen lassen sich mit dem Mikroskopobjektiv sowohl sphärische Abberationen als auch Farblängsfehler beseitigen, so dass die Möglichkeit besteht, mit nur einem Objektiv hochauflösende mikroskopische Untersuchungen bei veränderten Immersionen durchzuführen. Ferner kann man in Proben mit verschiedenen dispersiven Eigenschaften fokussieren, ohne dass die apochromatische Funktion verloren geht.

Vorteilhafterweise ist die Korrekturfunktion zur Veränderung des Farblängsfehlers durch Verstellung des Luftabstandes zwischen der ersten Linse und der zweiten Linse des ersten Teilsystems durchführbar, wobei Verstellungen zur Veränderung des Farblängsfehlers von + 0,17 mm möglich sind.

In einer vorteilhaften Ausgestaltungsvariante ist die Korrekturfunktion der sphärischen Aberration zur Veränderung des Nijboer-Zernike Koeffizienten 3. Ordnung über die Verstellung des Luftabstandes zwischen der zweiten Linse des ersten Zweifachkittgliedes und der ersten Linse des zweiten Zweifachkittgliedes durchführbar.

Zur Veränderung der Luftabstände zum Zwecke der Einstellung der Korrekturfunktionen sind zweckmäßigerweise mechanische, von Hand betätigbare, Mittel vorhanden.

Denkbar ist auch, dass zum Zwecke der Generierung geeigneter Luftabstände das Objektiv mit einer Steuereinrichtung gekoppelt ist, mit welcher über Zielfunktionen von Optikprogrammen das Verlaufsverhalten der Luftabstände erfass- und steuerbar ist.

Das erfindungsgemäße "Doppelkorrektions Mikroskopobjektiv" ist beugungsbegrenzend apochromatisch korrigiert, hat ein Bildfeld vom 23 mm, eine Vergrößerung von 20x und eine objektseitige Apertur von 1,0 bei einer mittleren Immersionsbrechzahl von 1.3827 (leicht variable Immersion). Der freie Arbeitsabstand hat trotz der großen Apertur eine Länge von 5,6 mm bei einer Abgleichlänge von 105 mm.

Nachfolgend wird das erfindungsgemäße planapochromatisch korrigierte Mikroskopobjektiv anhand eines Ausführungsbeispiels näher erläutert. Dazu zeigen:
- Fig. 1: eine Darstellung der Teilsysteme des Mikroskopobjektivs,
- Fig. 2: eine Darstellung des Mikroskopobjektivs mit den Konstruktionsdatenbezugszeichen der Dicken, beziehungsweise Luftabstände sowie der Lagen der Korrekturfunktionen,
- Fig. 3: eine Darstellung des Mikroskopobjektivs mit den Konstruktionsdatenbezugszeichen der Radien der Einzellinsen,
- Fig. 4: eine Darstellung des Mikroskopobjektivs mit dem nachgeschalteten Tubuslinsensystem,
- Fig. 5: eine Darstellung des Farblängsfehlerverlaufs und
- Fig. 6: eine Darstellung der Drehung des Farbkurvenverlaufs aus Fig.5 bei Änderung des Luftabstandes LA1 um -0.1mm.

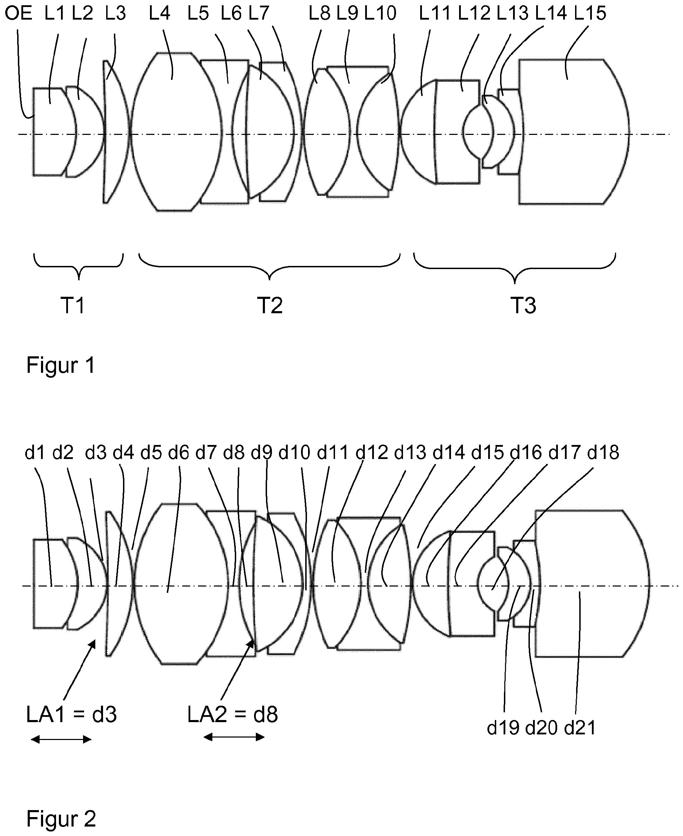

Figur 1 zeigt die Linsenanordnung der drei optischen Teilsysteme, von der Objektebene OE aus betrachtet mit den Teilsystemen T1, T2 und T3.

Das Teilsystem T1 besteht aus zwei Einzellinsen L2 und L3, wobei beide Linsen in Richtung der Objektebene OE durchgebogene Sammellinsen sind. L1 kennzeichnet das Immersionsmittel.

Das zweite Teilsystem T2 besitzt ein Zweifachkittglied mit den Linsen L4 und L5, ein weiteres Zweifachkittglied mit den Linsen L6 und L7 und ein Dreifachkittglied mit den Linsen L8, L9 und L10, wobei die in Richtung der Objektebene OE orientierten Linsen L4, L6 und L8 Sammellinsen sind.

Das dritte Teilsystem T3 besteht aus einem Zweifachkittglied mit den Linsen L11 und L12 und einem Dreifachkittglied mit den Linsen L13, L14 und L15, wobei die konkave Fläche der Linse L12 des Zweifachkittgliedes der Bildseite zugewandt ist und die konkave Fläche der Linse L13 des Dreifachkittgliedes in Richtung der Objektebene OE orientiert ist.

In Figur 2 sind die Luftabstände zwischen den Linsen, beziehungsweise die Dicken d1 bis d21 der optischen Elemente sowie die Korrekturfunktion LA1 und LA2 dargestellt.

Die Korrekturfunktion LA2 dient zur Beseitigung sphärischer Aberrationen über die Veränderung des Luftabstandes d8 im Stellbereich des Nijboer-Zernike Koeffizienten 3. Ordnung.

Über die Korrekturfunktion LA1 erfolgt eine Einstellung des Farblängsfehlers durch Drehung der Kurve s(λ), welche die Abhängigkeit des Farbortes s von der Wellenlänge λ beschreibt. Dazu ist der Luftabstand d3 in einem Stellbereich von + 0,17 mm veränderbar.

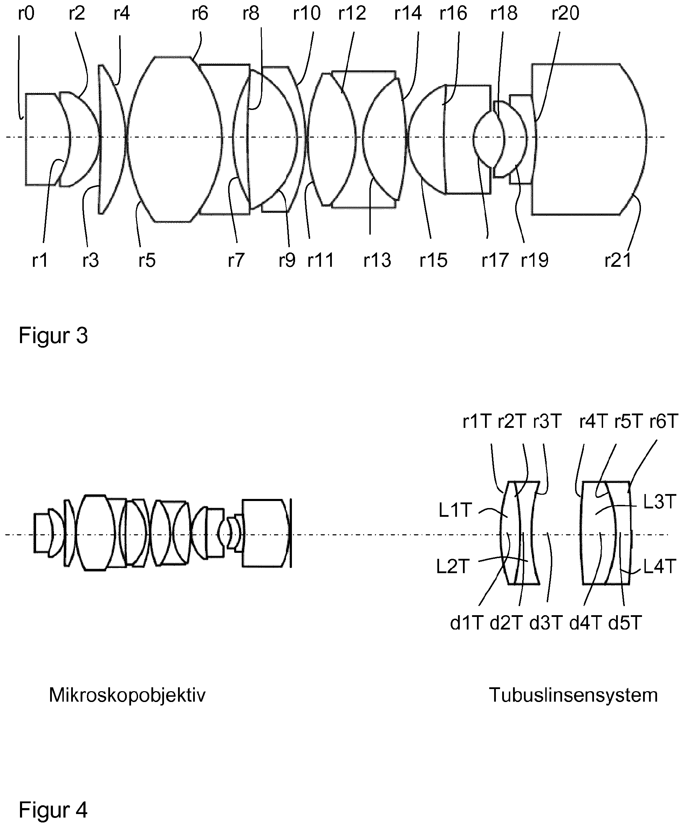

Figur 3 zeigt das erfindungsgemäße Mikroskopobjektiv mit den Radien r0 bis r21 der einzelnen Linsen L2 bis L15.

In Figur 4 wird das Mikroskopobjektiv mit dem nachgeschalteten Tubuslinsensystem, welches durch die Linsen L1T bis L4T, deren Dicken, beziehungsweise Luftabstände zwischen den optischen Elementen d1T bis d5T sowie deren Radien r1T bis r6T charakterisiert ist, dargestellt.

Bei Verwendung einer leicht variablen wasserähnlichen Immersion, einem Bildfeld von 23 mm, einer Vergrößerung von 20x, einer objektseitigen Apertur von 1.0, einem freien Arbeitsabstand von 5,6 mm sowie einer Abgleichlänge von 105 mm ergeben sich folgende Konstruktionsdaten für das Mikroskopobjektiv, wobei r0 bis r21 die Krümmungsradien in mm, d1 bis d21 die Dicken, beziehungsweise Luftabstände in mm, ve die Abbezahlen und ne die Brechzahlen sind:

| Linse L1 - L15 | Krümmungsradius r0 - r21 (mm) | Dicke d1 - d21 (mm) | Brechzahl nₑ | Abbezahl νₑ |
|---|---|---|---|---|
| 1 | unendlich (Immersion) | 7,423 | 1,38271 | 51,64 |
| 2 | -12,2304 | 5,0 | 1,60897 | 43,43 |
| | -8,5343 | **LA1 = 0,18** | | |
| 3 | -191,127 | 4,18 | 1,63483 | 63,50 |
| | -21,7538 | 0,277 | | |
| 4 | 22,712 | 15,92 | 1,65141 | 52,73 |
| 5 | -20,2422 | 1,81 | 1,64132 | 42,20 |
| | 21,287 | **LA2 = 2,42** | | |
| 6 | 127,0975 | 8,4 | 1,53019 | 76,58 |
| 7 | -12,6822 | 1,48 | 1,64132 | 42,20 |
| | -25,851 | 0,28 | | |
| 8 | 24,938 | 8,1 | 1 ,439854 | 94,49 |
| 9 | -15,9619 | 1,2 | 1,64132 | 42,20 |
| 10 | 12,0575 | 7,3 | 1,59446 | 68,00 |
| | -40,679 | 0,29 | | |
| 11 | 9,7156 | 6,0 | 1,59446 | 68,00 |
| 12 | 94,4084 | 4,98 | 1,88815 | 40,52 |
| | 5,386 | 5,274 | | |
| 13 | -7,285 | 3,75 | 1,65222 | 33,60 |
| 14 | -6,979 | 1,6 | 1,73739 | 51,24 |
| 15 | -30,9464 | 18,58 | 1,79007 | 43,80 |
| | -19,387 | 86,556 Abstand zur Tubuslinse | | |

mit folgenden Konstruktionsdaten des Tubuslinsensystems, wobei r1T bis r6T die Krümmungsradien in mm und d1T bis d5T die Dicken, beziehungsweise Luftabstände in mm ve die Abbezahlen und ne die Brechzahlen sind:

| Linse L1T-L4T | Krümmungsradius r 1T-r6T (mm) | Dicke d1T - d5T (mm) | Brechzahl nₑ | Abbezahl νₑ |
|---|---|---|---|---|
| 1 | 45,6448 | 8,0 | 1,57125 | 55,70 |
| 2 | -67,3134 | 4,5 | 1,72308 | 29,39 |
| | 45,316 | 20,2 | | |
| 3 | 143,2827 | 14,6 | 1,59667 | 35,03 |
| 4 | -34,2288 | 6,3 | 1,51872 | 63,96 |
| | -137,2633 | 63,36 Abstand zum Bildort | | |

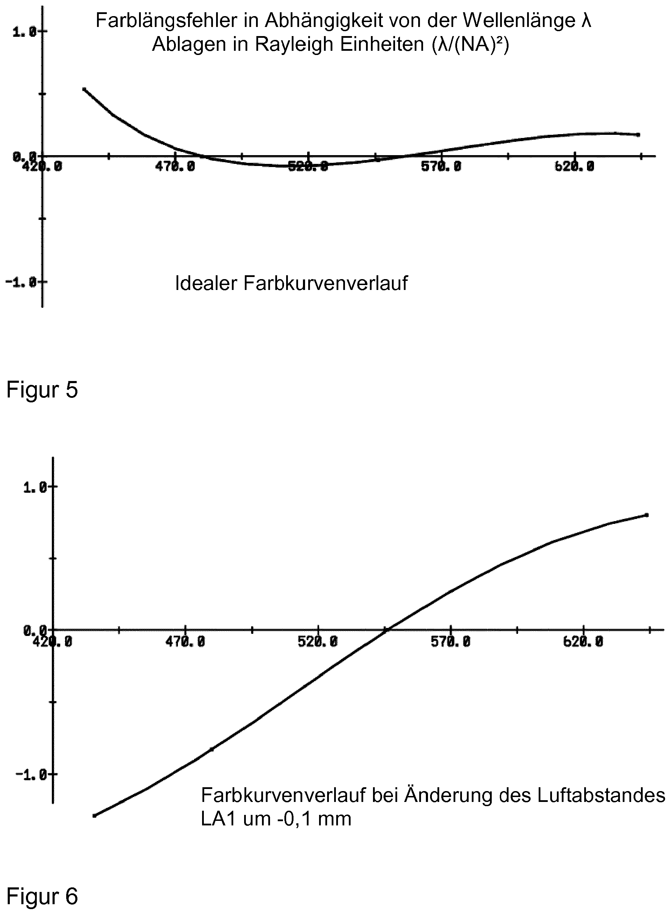

Figur 5 zeigt einen idealen Farbkurvenverlauf, wobei der Farblängsfehler in Abhängigkeit von der Wellenlänge λ, bei Ablagen in Rayleigh Einheiten (λ/(NA)²)dargestellt ist. NA ist dabei die numerische Apertur.

Ein Farbkurvenverlauf bei Änderung des Luftabstandes d3 (Korrekturfunktion LA1) wird in Figur 6 dargestellt.

### Bezugszeichenliste

- L1: Immersionsmittel
- L2 bis L15: Linse Mikroskopobjektiv
- d1 bis d21: Dicke/Luftabstand Mikroskopobjektiv
- T1,T2,T3: Teilsystem Mikroskopobjektiv
- r0 bis r21: Radien Mikroskopobjektiv
- LA1,LA2: Korrekturfunktion
- OE: Objektebene
- L1T bis J4T: Linse Tubuslinsensystem
- d1T bis d5T: Dicke/Luftabstand Tubuslinsensystem
- r1T bis r6T: Radien Tubuslinsensystem
- λ: Wellenlänge
- s: Farbort
- ne: Brechzahl
- νe: Abbezahl

## Patentansprüche

1. Planapochromatisch korrigiertes Mikroskopobjektiv für hochauflösende Mikroskopieanwendungen mit wechselnden dispersiven Immersionsverhältnissen, welches aus mehreren Linsen und/oder Linsengruppen umfassenden Teilsystemen zusammengesetzt ist, ein erstes Einstellmittel für eine Korrekturfunktion (LA2) zur Beseitigung sphärischer Aberration durch Veränderung von Luftabständen zwischen den Linsen oder Abstandskombinationen aufweist und ein davon unabhängiges zweites Einstellmittel für eine weitere Korrekturfunktion (LA1) zur Beseitigung von Farblängsfehlern durch Veränderung von Luftabständen oder Abstandskombinationen besitzt, wobei die Einflussnahme auf den Farblängsfehler einer Drehung der Kurve s (λ) welche die Abhängigkeit des Farbortes (s) von der Wellenlänge (λ) beschreibt, entspricht, wobei die Drehrichtung durch die Über- oder Unterkorrektion des Farblängsfehlers bestimmt ist.

2. Planapochromatisch korrigiertes Mikroskopobjektiv nach Anspruch 1, **gekennzeichnet dadurch, dass** ausgehend von der Objektebene (OE) drei Teilsysteme (T1,T2,T3) vorhanden sind, wobei
- das erste Teilsystem (T1) aus zwei Einzellinsen (L2,L3) besteht, wobei beide Linsen (L2) und (L3) in Richtung der Objektebene (OE) durchgebogene Sammellinsen sind,
- das zweite Teilsystem (T2) aus einem Zweifachkittglied mit den Linsen (L4,L5), einem weiteren Zweifachkittglied mit den Linsen (L6,L7) und einem Dreifachkittglied mit den Linsen (L8,L9,L10) besteht, wobei die in Richtung der Objektebene (OE) orientierten Linsen (L4,L6,L8) Sammellinsen sind,
- das dritte Teilsystem (T3) aus einem Zweifachkittglied mit den Linsen (L11,L12) und einem Dreifachkittglied mit den Linsen (L13,L14,L15) in einer gaussförmigen Anordnung besteht, wobei die konkave Fläche der Linse (L12) des Zweifachkittgliedes der Bildseite zugewandt ist und die konkave Fläche der Linse (L13) des Dreifachkittgliedes in Richtung der Objektebene (OE) orientiert ist und
- die Korrekturfunktion (LA2) die sphärische Aberration durch Veränderung des Nijboer-Zernike Koeffizienten 3. Ordnung beeinflusst, wobei eine durch Nijboer-Zernike Polynome beschriebenen Wellenfläche zur optischen Abbildung eines Punktes, variiert wird.

3. Planapochromatisches korrigiertes Mikroskopobjektiv nach den Ansprüchen 1 und 2, **dadurch gekennzeichnet, dass** die Korrekturfunktion (LA1) zur Veränderung des Farblängsfehlers durch Verstellung des Luftabstandes (d3) zwischen der Linse (L2) und der Einzellinse (L3) des ersten Teilsystems (T1) durchführbar ist.

4. Planapochromatisches korrigiertes Mikroskopobjektiv nach den Ansprüchen 1 und 2, **dadurch gekennzeichnet, dass** der Stellbereich zur Veränderung des Farblängsfehlers ± 0,17 mm ist.

5. Planapochromatisches korrigiertes Mikroskopobjektiv nach Anspruch 2, **dadurch gekennzeichnet, dass** die Korrekturfunktion (LA2) der sphärischen Aberration zur Veränderung des Nijboer-Zernike Koeffizienten 3. Ordnung über die Verstellung des Luftabstandes (d8) zwischen der zweiten Linse (L5) des ersten Zweifachkittgliedes und der ersten Linse (L6) des zweiten Kittgliedes vom zweiten Teilsystem (T2) durchführbar ist.

6. Planapochromatisches korrigiertes Mikroskopobjektiv nach den Ansprüchen 1 bis 5, **dadurch gekennzeichnet, dass** zur Veränderung der Luftabstände (d3,d8) zum Zwecke der Einstellung der Korrekturfunktionen (LA1,LA2) mechanische, von Hand betätigbare, Mittel vorhanden sind.

7. Planapochromatisches korrigiertes Mikroskopobjektiv nach den Ansprüchen 1 bis 5, **dadurch gekennzeichnet, dass** zum Zwecke der Generierung geeigneter Luftabstände (d3,D8) das Objektiv mit einer Steuereinrichtung gekoppelt ist, mit welcher über Zielfunktionen von Optikprogrammen das Verlaufsverhalten der Luftabstände (d3,d8) erfass- und steuerbar ist.

8. Planapochromatisches korrigiertes Mikroskopobjektiv nach den Ansprüchen 1 bis 5, **gekennzeichnet durch** folgende Konstruktionsdaten mit Krümmungsradien r0 bis r21 in mm, den Dicken, beziehungsweise Luftabständen d1 bis d21 in mm, Brechzahlen ne, Abbezahlen ve und der Verwendung einer leicht variablen wasserähnlichen Immersion, bei einem Bildfeld von 23 mm, einer Vergrößerung von 20x, einer objektseitigen Apertur von 1.0, einem freien Arbeitsabstand von 5,6 mm sowie einer Abgleichlänge von 105 mm:
| Linse L1 - L15 | Krümmungsradius r0 - r21 (mm) | Dicke d1 - d21 (mm) | Brechzahl nₑ | Abbezahl νₑ |
|---|---|---|---|---|
| 1 | unendlich (Immersion) | 7,423 | 1,38271 | 51,64 |
| 2 | -12,2304 | 5,0 | 1,60897 | 43,43 |
| | -8,5343 | **LA1 = 0,18** | | |
| 3 | -191,127 | 4,18 | 1,63483 | 63,50 |
| | -21,7538 | 0,277 | | |
| 4 | 22,712 | 15,92 | 1,65141 | 52,73 |
| 5 | -20,2422 | 1,81 | 1,64132 | 42,20 |
| | 21,287 | **LA2 = 2,42** | | |
| 6 | 127,0975 | 8,4 | 1,53019 | 76,58 |
| 7 | -12,6822 | 1,48 | 1,64132 | 42,20 |
| | -25,851 | 0,28 | | |
| 8 | 24,938 | 8,1 | 1,439854 | 94,49 |
| 9 | -15,9619 | 1,2 | 1,64132 | 42,20 |
| 10 | 12,0575 | 7,3 | 1,59446 | 68,00 |
| | -40,679 | 0,29 | | |
| 11 | 9,7156 | 6,0 | 1,59446 | 68,00 |
| 12 | 94,4084 | 4,98 | 1,88815 | 40,52 |
| | 5,386 | 5,274 | | |
| 13 | -7,285 | 3,75 | 1,65222 | 33,60 |
| 14 | -6,979 | 1,6 | 1,73739 | 51,24 |
| 15 | -30,9464 | 18,58 | 1,79007 | 43,80 |
| | -19,387 | 86,556 Abstand zur Tubuslinse | | |
mit folgenden Konstruktionsdaten des Tubuslinsensystems, wobei r1T bis r6T die Krümmungsradien in mm und d1T bis d5T die Dicken, beziehungsweise Luftabstände in mm sind:
| Linse L1 T - L4T | Krümmungsradius r 1T - r6T (mm) | Dicke d1T-d5T (mm) | Brechzahl nₑ | Abbezahl νₑ |
|---|---|---|---|---|
| 1 | 45,6448 | 8,0 | 1,57125 | 55,70 |
| 2 | -67,3134 | 4,5 | 1,72308 | 29,39 |
| | 45,316 | 20,2 | | |
| 3 | 143,2827 | 14,6 | 1,59667 | 35,03 |
| 4 | -34,2288 | 6,3 | 1,51872 | 63,96 |
| | -137,2633 | 63,36 Abstand zum Bildort | | |

## Claims

1. Plan-apochromatically corrected microscope objective for high-resolution microscopy uses with changing dispersive immersion conditions, composed of a plurality of subsystems comprising lenses and/or lens groups, has a first setting means for a correction function (LA2) for eliminating spherical aberration by changing air gaps between the lenses or gap combinations and has an independent second setting means for a further correction function (LA1) for eliminating axial chromatic aberration by changing air gaps or gap combinations, wherein the influence on the axial chromatic aberration corresponds to a rotation of the curve s(λ) describing the dependence of the colour point (s) on the wavelength (λ), wherein the rotation direction is determined by the overcorrection or undercorrection of the axial chromatic aberration.

2. Plan-apochromatically corrected microscope objective according to Claim 1, **characterized in that**, starting from the object plane (OE), three subsystems (T1, T2, T3) are present, wherein
- the first subsystem (T1) consists of two individual lenses (L2, L3), wherein both lenses (L2) and (L3) are converging lenses curved in the direction of the object plane (OE),
- the second subsystem (T2) consists of a cemented doublet with the lenses (L4, L5), a further cemented doublet with the lenses (L6, L7), and a cemented triplet with the lenses (L8, L9, L10), wherein the lenses (L4, L6, L8) oriented in the direction of the object plane (OE) are converging lenses,
- the third subsystem (T3) consists of a cemented doublet with the lenses (L11, L12) and a cemented triplet with the lenses (L13, L14, L15) in a Gaussian arrangement, wherein the concave face of the lens (L12) of the cemented doublet faces the image side and the concave face of the lens (L13) of the cemented triplet is oriented toward the object plane (OE) and
- the correction function (LA2) influences the spherical aberration by changing the third-order Nijboer-Zernike coefficient, wherein a wavefront described by Nijboer-Zernike polynomials is varied for the optical imaging of a point.

3. Plan-apochromatically corrected microscope objective according to Claims 1 and 2, **characterized in that** the correction function (LA1) is able to be performed for changing the axial chromatic aberration by adjusting the air gap (d3) between the lens (L2) and the individual lens (L3) of the first subsystem (T1).

4. Plan-apochromatically corrected microscope objective according to Claims 1 and 2, **characterized in that** the setting range for changing the axial chromatic aberration is ±0.17 mm.

5. Plan-apochromatically corrected microscope objective according to Claim 2, **characterized in that** the correction function (LA2) of the spherical aberration for changing the third-order Nijboer-Zernike coefficient is able to be performed by adjusting the air gap (d8) between the second lens (L5) of the first cemented doublet and the first lens (L6) of the second cemented element of the second subsystem (T2).

6. Plan-apochromatically corrected microscope objective according to Claims 1 to 5, **characterized in that** mechanical, manually operable means are present for the purpose of setting the correction functions (LA1, LA2) for changing the air gaps (d3, d8).

7. Plan-apochromatically corrected microscope objective according to Claims 1 to 5, **characterized in that**, for the purpose of generating suitable air gaps (d3, d8), the objective is coupled to a control device with which the profile behaviour of the air gaps (d3, d8) is capturable and controllable via target functions of optics programs.

8. Plan-apochromatically corrected microscope objective according to Claims 1 to 5, **characterized by** the following design data with radii of curvature r0 to r21 in mm, thicknesses, or air gaps, d1 to d21 in mm, refractive indices ne, Abbe numbers νe, and the use of an easily variable, water-like immersion, at an image field of 23 mm, a magnification of 20x, an object-side aperture of 1.0, a free working distance of 5.6 mm and a parfocal length of 105 mm:
| Lens L1-L15 | Radius of curvature r0-r21 (mm) | Thickness d1-d21 (mm) | Refractive index nₑ | Abbe number νₑ |
|---|---|---|---|---|
| 1 | infinite (immersion) | 7.423 | 1.38271 | 51.64 |
| | | | | |
| 2 | -12.2304 | 5.0 | 1.60897 | 43.43 |
| | -8.5343 | LA1 = 0.18 | | |
| 3 | -191.127 | 4.18 | 1.63483 | 63.50 |
| | -21.7538 | 0.277 | | |
| 4 | 22.712 | 15.92 | 1.65141 | 52.73 |
| 5 | -20.2422 | 1.81 | 1.64132 | 42.20 |
| | 21.287 | LA2 = 2.42 | | |
| 6 | 127.0975 | 8.4 | 1.53019 | 76.58 |
| 7 | -12.6822 | 1.48 | 1.64132 | 42.20 |
| | -25.851 | 0.28 | | |
| 8 | 24.938 | 8.1 | 1.439854 | 94.49 |
| 9 | -15.9619 | 1.2 | 1.64132 | 42.20 |
| 10 | 12.0575 | 7.3 | 1.59446 | 68.00 |
| | -40.679 | 0.29 | | |
| 11 | 9.7156 | 6.0 | 1.59446 | 68.00 |
| 12 | 94.4084 | 4.98 | 1.88815 | 40.52 |
| | 5.386 | 5.274 | | |
| 13 | -7.285 | 3.75 | 1.65222 | 33.60 |
| 14 | -6.979 | 1.6 | 1.73739 | 51.24 |
| 15 | -30.9464 | 18.58 | 1.79007 | 43.80 |
| | -19.387 | 86.556 distance from tube lens | | |
with the following design data of the tube lens system, wherein r1T to r6T denote the radii of curvature in mm and d1T to d5T denote the thicknesses, or air gaps, in mm:
| Lens L1T-L4T | Radius of curvature r1T-r6T (mm) | Thickness d1T-d5T (mm) | Refractive index nₑ | Abbe number νₑ |
|---|---|---|---|---|
| 1 | 45.6448 | 8.0 | 1.57125 | 55.70 |
| 2 | -67.3134 | 4.5 | 1.72308 | 29.39 |
| | 45.316 | 20.2 | | |
| 3 | 143.2827 | 14.6 | 1.59667 | 35.03 |
| 4 | -34.2288 | 6.3 | 1.51872 | 63.96 |
| | -137.2633 | 63.36 distance from image location | | |

## Revendications

1. Objectif de microscope à correction plan-apochromatique pour applications de microscopie à haute résolution avec des rapports d'immersion dispersifs, lequel est composé de systèmes partiels comportant plusieurs lentilles et/ou groupes de lentilles, présente un premier moyen de réglage pour une fonction de correction (LA2) destinée à éliminer l'aberration sphérique en modifiant des écarts dans l'air entre les lentilles ou des combinaisons d'écarts et possède un deuxième moyen de réglage, indépendant de celui-ci, pour une fonction de correction supplémentaire (LA1) destinée à éliminer des aberrations chromatiques longitudinales modifiant des écarts dans l'air ou des combinaisons d'écarts, l'influence sur les aberrations chromatiques longitudinales correspondant à une rotation de la courbe s(λ) qui décrit la dépendance de la localisation chromatique (s) à la longueur d'onde (λ), le sens de rotation étant déterminé par une sur- ou une sous-correction de l'aberration chromatique longitudinale.

2. Objectif de microscope à correction plan-apochromatique selon la revendication 1, **caractérisé en ce qu'**en partant du plan d'objet (OE), trois systèmes partiels (T1, T2, T3) sont présents,
- le premier système partiel (T1) se composant de deux lentilles individuelles (L2, L3), les deux lentilles (L2) et (L3) étant des lentilles convergentes courbées en direction du plan d'objet (OE),
- le deuxième système partiel (T2) se composant d'un double élément cimenté avec les lentilles (L4, L5), d'un double élément cimenté supplémentaire avec les lentilles (L6, L7) et d'un triple élément cimenté avec les lentilles (L8, L9, L10), les lentilles (L4, L6, L8) orientées en direction du plan d'objet (OE) étant des lentilles convergentes,
- le troisième système partiel (T3) se composant d'un double élément cimenté avec les lentilles (L11, L12) et d'un triple élément cimenté avec les lentilles (L13, L14, L15) dans un arrangement gaussien, la surface concave de la lentille (L12) du double élément cimenté faisant face au côté de l'image et la surface concave de la lentille (L13) du triple élément cimenté étant orientée en direction du plan d'objet (OE) et
- la fonction de correction (LA2) influençant l'aberration sphérique en modifiant le coefficient de Nijboer-Zernike du 3^{ème} ordre, une surface ondulatoire décrite par le polynôme de Nijboer-Zernike étant mise à varier pour la représentation optique d'un point.

3. Objectif de microscope à correction plan-apochromatique selon les revendications 1 et 2, **caractérisé en ce que** la fonction de correction supplémentaire (LA1) destinée à modifier l'aberration chromatique longitudinale peut être exécutée en réglant l'écart dans l'air (d3) entre la lentille (L2) et la lentille individuelle (L3) du premier système partiel (T1).

4. Objectif de microscope à correction plan-apochromatique selon les revendications 1 et 2, **caractérisé en ce que** la plage de réglage destinée à modifier l'aberration chromatique longitudinale est de ±0,17 mm.

5. Objectif de microscope à correction plan-apochromatique selon la revendication 2, **caractérisé en ce que** la fonction de correction (LA2) de l'aberration sphérique destinée à modifier le coefficient de Nijboer-Zernike du 3^{ème} ordre peut être exécutée en réglant l'écart dans l'air (d8) entre la deuxième lentille (L5) du premier double élément cimenté et la première lentille (L6) du deuxième élément cimenté du deuxième système partiel (T2).

6. Objectif de microscope à correction plan-apochromatique selon les revendications 1 à 5, **caractérisé en ce que** des moyens mécaniques actionnables à la main sont présents pour la modification des écarts dans l'air (d3, d8) à des fins de réglage des fonctions de correction (LA1, LA2).

7. Objectif de microscope à correction plan-apochromatique selon les revendications 1 à 5, **caractérisé en ce qu'**à des fins de génération d'écarts dans l'air (d3, d8) appropriés, l'objectif est couplé à un dispositif de commande qui permet de détecter et de commander le comportement du tracé des écarts dans l'air (d3, d8) par le biais de fonctions cible de programmes optiques.

8. Objectif de microscope à correction plan-apochromatique selon les revendications 1 à 5, **caractérisé par** les données de constructions suivantes avec des rayons de courbure r0 à r21 en mm, les épaisseurs, les écarts dans l'air d1 à d21 en mm, les indices de réfraction ne, les nombres d'Abbe ve et l'utilisation d'une immersion similaire à l'eau facilement variable, avec un champ d'image de 23 mm, un grossissement de 20x, une ouverture côté objet de 1.0, un écart de travail libre de 5,6 mm ainsi qu'une longueur d'alignement de 105 mm :
| Lentille L1 - L15 | Rayon de courbure r0 - r21 (mm) | Épaisseur d1 - d21 (mm) | Indice de réfraction nₑ | Nombre d'Abbe vₑ |
|---|---|---|---|---|
| 1 | Infini (immersion) | 7,423 | 1,38271 | 51,64 |
| 2 | -12,2304 | 5,0 | 1,60897 | 43,43 |
| | -8,5343 | LA1 = 0,18 | | |
| 3 | -191,127 | 4,18 | 1,63483 | 63,50 |
| | -21,7538 | 0,277 | | |
| 4 | 22,712 | 15,92 | 1,65141 | 52,73 |
| 5 | -20,2422 | 1,81 | 1,64132 | 42,20 |
| | 21,287 | LA2 = 2,42 | | |
| 6 | 127,0975 | 8,4 | 1,53019 | 76,58 |
| 7 | -12,6822 | 1,48 | 1,64132 | 42,20 |
| | -25,851 | 0,28 | | |
| 8 | 24,938 | 8,1 | 1,439854 | 94,49 |
| 9 | -15,9619 | 1,2 | 1,64132 | 42,20 |
| 10 | 12,0575 | 7,3 | 1,59446 | 68,00 |
| | -40,679 | 0,29 | | |
| 11 | 9,7156 | 6,0 | 1,59446 | 68,00 |
| 12 | 94,4084 | 4,98 | 1,88815 | 40,52 |
| | 5,386 | 5,274 | | |
| 13 | -7,285 | 3,75 | 1,65222 | 33,60 |
| 14 | -6,979 | 1,6 | 1,73739 | 51,24 |
| 15 | -30,9464 | 18,58 | 1,79007 | 43,80 |
| | -19,387 | 86,556 Écart par rapport à la lentille tubulaire | | |
avec les données de construction suivantes du système de lentille tubulaire, r1T à r6T étant les rayons de courbure en mm et d1T à d5T les épaisseurs ou les écarts dans l'air en mm :
| Lentille L1T - L4T | Rayon de courbure r1T - r6T (mm) | Épaisseur d1T - d5T (mm) | Indice de réfraction nₑ | Nombre d'Abbe vₑ |
|---|---|---|---|---|
| 1 | 45,6448 | 8,0 | 1,57125 | 55,70 |
| 2 | -67,3134 | 4,5 | 1,72308 | 29,39 |
| | 45,316 | 20,2 | | |
| 3 | 143,2827 | 14,6 | 1,59667 | 35,03 |
| 4 | -34,2288 | 6,3 | 1,51872 | 63,96 |
| | -137,2633 | 63,36 Écart par rapport à l'endroit de l'image | | |
